# EUROPEAN PATENT SPECIFICATION

(11) **EP 0 565 793 B1**
(45) Date of publication and mention of the grant of the patent: **19.07.1995**
(21) Application number: 92307137.7
(22) Date of filing: 05.08.1992
(51) Int. Cl.: A01K 61/00

(54) **Stanchion used for floating scaffold of constructed aquatic fish preserve**
Runge für schwimmende Vorrichtung zur Aufzucht von Fischen
Rancher pour structure flottende pour pisciculture

(30) Priority: 20.12.1991 JP 105511/91
(43) Date of publication of application: 20.10.1993
(73) Proprietor: BRIDGESTONE CORPORATION, Tokyo 104 (JP)
(72) Inventor: Sasaki, Hiroshi, Hodogaya-ku, Yokohama-shi, Kanagawa (JP)
(74) Representative: Healy, Cecilia Patricia

(56) References cited:
- WO-A-85/03411
- GB-A- 2 091 071
- JP-U- 5 826 857

## Description

### Field of the Invention

Fish preserves are used for the artificial cultivation of aquatic products, e.g., in raising the products, in maintaining the products as they develop, or in fattening the products, and are used for storing the aquatic products for either a short or long time after they have been cultivated. A recent trend is to expand fish preserves and make them larger in scale. However, in order to evade environmental problems and other adverse effects, off-shore fish preserves have been created. These fish preserves have been unexpectedly successful in dealing with these problems.

Enlarging the fish preserves and making them larger in scale require, first of all, a sturdy construction for the fish preserve. It is also extremely important that safe maintenance be possible.

Proposed herein is an improved stanchion which is used with a floating scaffold for a constructed aquatic fish preserve and which is equipped with a supporting pillar which also serves as a handrail. This handrail/supporting pillar is used to satisfy the above-mentioned demands for enlarging the fish preserve, and to improve the safety of working and walking on the floating scaffold.

### Background Information

A floating scaffold for a fish preserve is disclosed in Japanese Utility Model Application Laid-Open No. 58-26857. The floating scaffold has a connected member which is a large diameter hose (outer diameter approximately several tens of centimeters). The hose is made of ordinary rubber or a rubber-like elastic material, and the inner cavity thereof is filled with air. The floating scaffold floats on the surface of water and defines an area of water as a circle, a square, or a polygon where the fish preserve is formed. An anchor is necessary at a strategic point to moor the fish preserve. A side net is hung from the floating scaffold into the water so as to partition the interior of the fish preserve from the outside waters. The stanchions support the fence net of the fish preserve, which surrounds the above-mentioned area of water at the surface of the water, and support the rope handrail or the like, which is used to aid in the safety of those working or walking on the floating scaffold. The stanchions are disposed at intervals of several meters.

The above-described conventional stanchion is mounted to the floating scaffold by a pair of crescent-shaped portions, which each extend in an approximate semicircle of the floating scaffold and are hinge-connected at each bottom end. At each top end, the stanchion and the floating scaffold are connected by clamp portions formed with L-shaped ends which are secured by a nut-and-bolt. A reinforcing plate is provided so as to be fixed to a bent base end of the stanchion at one of the crescent-shaped portions. The reinforcing plate connects the clamp portion and the stanchion, and is used to strengthen the construction.

However, these hinged connecting portions protrude into the water at the bottom of the floating scaffold. Also, the excess end portions of the bolts at the clamp portions extend towards the stanchions at the top of the floating scaffold. Therefore, when the side net of the fish preserve is pushed and moved by tidal currents, these protruding portions of the bolts often become entangled with and ensnared in the side net. Further, when there are strong wind and waves, an inconvenience arises as the net meshes are flung up and the screw legs of the bolts are caught therein. The force from high waves and strong winds may cause further damage to the net thus caught. There is another drawback in that strong winds can cause the fish preserve fence net and the stanchions to rub against each other, which may easily damage the fence net.

In view of the aforementioned, it is an object of the present invention to provide a stanchion in which there are fewer opportunities for a fish preserve fence net to contact the stanchion, which is installed on a floating scaffold. Even when a fish preserve side net is pushed and flung up by tidal currents or high waves, there is no fear of the nets being damaged by being entangled with or caught in parts of the floating scaffold.

The present invention also proposes means for making clamp portions more sturdy.

According to the invention there is provided a stanchion for use in constructing a fish preserve defining a limited area of water, the fish preserve being defined within a floating scaffold comprising a generally circular body having an inner cavity filled with air so that the scaffold floats on a water surface, the stanchion being one of a plurality of stanchions provided on said floating scaffold at intervals along its length and being arranged to support a fish preserve fence net and a hand rail which are provided above the water surface, and to support a fish preserve side net which hangs into the water, the stanchion extending generally inwardly and upwardly so that the upper end is disposed within the limited area of water of the fish preserve over the water surface, the stanchion being secured to the floating scaffold by installation means, the installation means including band means which surround the floating scaffold and have opposed L-shaped ends, having aligned bolt holes to receive a bolt and nut connection to secure the band means to the floating scaffold, the stanchion being secured to the band means and there being reinforcement means to reinforce the fixing of the stanchion to the band means;
characterised in that
the stanchion has a tubular pipe-shaped body which curves inwardly above the surface of the water of the defined area, the reinforcement means comprises a pair of reinforcing members securing opposite sides of the band means to opposite sides of the tubular pipe-shaped body of the stanchion, the reinforcement means extending upwardly and inwardly towards the enclosed area at an angle to the water surface so as to render inaccessible the bolt and nut means securing the band means to the scaffold.

The reinforcing plates which reinforce the fixing of the pipe-shaped tubular body of the stanchion and the installation portion protect the net from being damaged by the bolt and nut fastening used on the installation portion.

In the present invention structured as described above, the band means, which is integrated with the stanchion, is a flexible band wrapped around the floating scaffold and elastically deformed such that the gap between the ends is widened. Then, the ends are easily brought into contact with each other around the floating scaffold. The stanchion can be installed at a key position on the floating scaffold by a slight operational force which tightens the bolt. The fish preserve fence net is suspended from the pipe-like body, which serves as the main portion of the stanchion, such that the fence net is sufficiently separated from the pipe-like body. Therefore, the fence net has less of a chance of contacting the stanchion. The chance of damage resulting from such contact also decreases. Further, no parts of the floating scaffold protrude beneath the surface of the water. The flange portions of the upper portion of the floating scaffold and the screw legs of the bolts are covered by the reinforcing plates. Therefore, even if the fish preserve side net is buffeted or blown by tidal currents, winds, or high waves, there is no fear of the side net being caught by parts of the floating scaffold.

Fig. 1A is an external view of main portions of a fish preserve relating to the present invention.

Fig. 1B is a schematic structural view of the fish preserve.

Fig. 2A is a side view of a stanchion of a first embodiment used in the fish preserve.

Fig. 2B is a plan view of the stanchion.

Fig. 3 is a side view of a second embodiment of the stanchion.

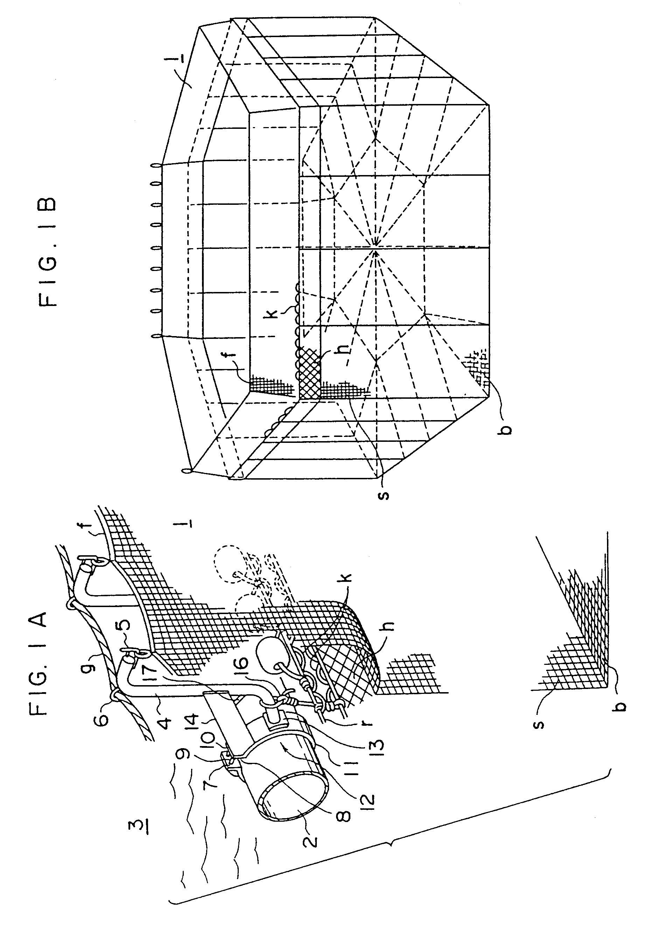

Fig. 1A illustrates the structure of main portions of an aquatic fish preserve to which the present invention of a stanchion used for a floating scaffold is applied. Fig. 1B is a schematic structural view of a net.

In the drawings, a fish preserve 1 is constructed in a body of water. A floating scaffold 2 is provided at the periphery of the fish preserve 1, and divides the water into an inside area of the fish preserve 1 and an outside area of outside waters 3. A stanchion 4 of a first embodiment is mounted on the floating scaffold 2.

The floating scaffold 2 is formed of a connected member which is a large diameter hose (the example in the drawings has a diameter of approximately 42cm ⌀ ) which is made of rubber or a rubber-like elastic material. Air, for example, is filled at a high pressure, usually 5kgf/cm², into an inner cavity of the hose. The floating scaffold 2 floats on the surface of the water in this rigid state, and surrounds the entire periphery of the fish preserve 1 (this state is illustrated only in part in the drawings).

The stanchions 4 are spaced 1 to 3 meters (m) apart along the direction in which the floating scaffold 2 extends. A fish preserve fence net f is hung from and supported by key hooks 5 provided at curved upper ends of the stanchions 4, and extends beneath the surface of the water. An eye hook 6 is provided at the curve of the curved upper end of each of the stanchions 4. A handrail rope g is inserted through and supported by the eye hooks 6.

In the present invention, the stanchion 4 is formed as a pipe-like body and made of a non-rusting material, e.g., a stainless steel pipe. The stanchions 4 are mounted to the floating scaffold 2 as follows.

A mounting portion 12 is formed of a belt 11, which is a band for extending around an outer periphery of the floating scaffold 2. The belt 11 is made of a non-rusting material, such as stainless steel. The belt 11 encircles the outer periphery of the floating scaffold 2 such that L-shaped ends 7, 8 face each other. A bolt 9 is inserted into insertion holes 10 formed respectively in each of the L-shaped ends 7, 8. The mounting portion 12 is fixed to a base end of the pipe-shaped body, i.e., the stanchion 4, at the inner side of a top half portion of the floating scaffold 2 via a doubling plate 13 by welding, for example. A pair of reinforcing plates 14 connect the pipe-like body and the nearer L-shaped end 8 at a slant, such that the insertion hole 10 of the bolt 9 is interposed between the reinforcing plates 14. The reinforcing plates 14 are fixed at this position by welding or the like.

It is preferable that the L-shaped end 7 also be reinforced by a pair of ribs 15.

At the connecting portion of the stanchion 4 near the base end of the pipe-like body, a fish preserve side net s is hung down deep into the water and supported by a hanging rope 16, which is called a button rope and is easily detachable, via an edge net h having a diagonal net mesh. Reference letter b denotes a bottom net. In order to maintain the upper edge of the edge net h approximately parallel with the surface of the water, the edge net h is supported so as to float by a rope r, along which there is a line of floats which are strung through many hanging loops k, which are called "happyaku". The loops k extend along the top and bottom of the edge net h and are sewn together along an unillustrated stretched rope so as to be easily removed.

The bottom edge of the edge net h is sewn together with the hem of the fish preserve fence net f such that there is sufficient slack therebetween.

A stay 17 is fixed by welding between the reinforcing plate 14 and the stanchion 4, and is able to restrain excessive movement of the hanging rope 16.

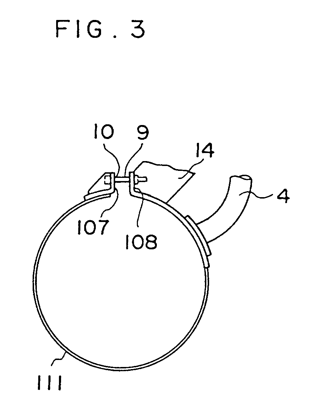

In a second embodiment illustrated in Fig. 3, all structures are the same as in the previous example, except for the end members. In Fig. 3, L-shaped ends 107, 108 are respectively fixed by welding to ends of a thin portion 111, which is a wound band. These L-shaped ends 107, 108 are made of stainless steel and are produced separately from the thin portion 111.

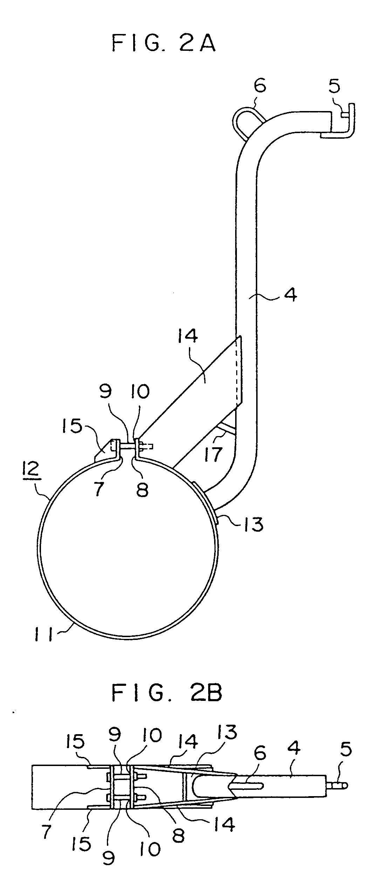

The stanchion 4 illustrated in Figs. 2A and 2B was constructed in the following way. An SUS 304 steel pipe (outer diameter 48.6 mm, pipe wall thickness 3.6 mm) was used for the stanchion 4. At a height of 1 m above the surface of the water, this pipe was bent in towards the interior of the fish preserve such that the bending length was 200 mm. The mounting portion 12 is formed of a band of SUS band steel (thickness 3 mm, width 100 mm, length, approximately 1.395 m) in which both L-shaped ends 7, 8 thereof are fixed by welding at the base end of the stanchion 4 via a doubling plate 13 of SUS 304 (thickness 3 mm, width 90 mm, length 90 mm). The construction was strengthened by the reinforcing plate 14, which was formed of an SUS trapezoid plate (thickness 3 mm, width 120 mm) and spanned between the L-shaped end 8 of the mounting portion 12 and the stanchion 4. The stanchion 4 thus made was attached to the floating scaffold 2 with a 422 mm radius of thickness. When the construction was tested, there was no fear of the fish preserve side net s being entangled with or ensnared in the floating scaffold 2 even when the fish preserve side net s drifted with tidal currents and parts thereof were blown up by waves. Even when the wind and waves were strong, the fence net f and the stanchion 4 did not greatly rub against each other.

Here, a thin stainless steel band, which is 2 to 4 mm thick, is suitable for the band. However, it is preferable to have thicker end members, which are separate from the band, integrated therewith by either lap welding or butt welding so that the mounting of the stanchion is more sturdy.

In the present invention, the mounting portion, which mounts the stanchion to the floating scaffold, does not protrude like a hinge portion on which the nets can catch, but is instead a band extending around the floating scaffold. Further, the L-shaped ends and the stanchion are connected by the pair of reinforcing plates so as to cover the excess end portions of the fastened bolts. Therefore, there is seldom any damage done to the fish preserve side nets due to the bolts being wrapped or ensnared in the side net. The fish preserve fence net is hung from and supported by the top ends, which bend toward the interior of the fish preserve, of the pipe-like members which serve as the supporting members of the stanchions. Therefore, the fence net seldom rubs against the stanchions, and damage seldom occurs. In this way, walking and working on the fish preserve are safe.

## Claims

1. A stanchion (4) for use in constructing a fish preserve defining a limited area of water, the fish preserve being defined within a floating scaffold (2) comprising a generally circular body having an inner cavity filled with air so that the scaffold (2) floats on a water surface, the stanchion being one of a plurality of stanchions provided on said floating scaffold (2) at intervals along its length and being arranged to support a fish preserve fence net (f) and a hand rail (g) which are provided above the water surface, and to support a fish preserve side net (s) which hangs into the water, the stanchion (4) extending generally inwardly and upwardly so that the upper end is disposed within the limited area of water of the fish preserve over the water surface, the stanchion (4) being secured to the floating scaffold (2) by installation means (7, 8, 9, 10, 11), the installation means including band means which surround the floating scaffold (2) and have opposed L-shaped ends (7,8), having aligned bolt holes (10) to receive a bolt and nut connection (9) to secure the band means to the floating scaffold, the stanchion (4) being secured to the band means and there being reinforcement means (14,17) to reinforce the fixing of the stanchion (4) to the band means;
characterised in that
the stanchion (4) has a tubular pipe-shaped body which curves inwardly above the surface of the water of the defined area, the reinforcement means comprises a pair of reinforcing members (14) securing opposite sides of the band means to opposite sides of the tubular pipe-shaped body of the stanchion (4), the reinforcement means extending upwardly and inwardly towards the enclosed area at an angle to the water surface so as to render inaccessible the bolt and nut means (9) securing the band means to the scaffold (2).

2. A stanchion for use in a floating scaffold according to claim 1 wherein the installation means (7, 8, 9, 10, 11) consists of a single band (11,) both end portions of the band (11) being L-shaped ends (7,8).

3. A stanchion for use in a floating scaffold according to claim 1 wherein said installation means (7, 8, 9 ,10, 11) has a pair of installation portions (107, 108), connected together by a portion (111) which is thinner than the said installation portions (107, 108) and which is provided with L-shaped ends (7,8) adapted to be secured together by bolt and nut means (9).

4. A stanchion for use in a floating scaffold according to any preceding claim wherein the band means is further reinforced by a pair of ribs or flanges (15) secured between opposite sides of the band means and opposite sides of the L-shaped end (7) remote from the stanchion (4), the ribs or flanges (15) rendering the bolt and nut connection (9) inaccessible from the outside of the defined limited area of water.

5. A stanchion for use in a floating scaffold according to any preceding claim wherein the reinforcing means (14, 17) has a stay member (17) extending somewhat downwardly from each reinforcing member (14) to a lower portion of the stanchion so as to limit upward movement of a hanging rope provided on the fish preserve below the level of said reinforcing members (14).

6. A stanchion for use in a floating scaffold according to any preceding claim wherein the floating scaffold is made of rubber or a rubber-like elastic material.

7. A stanchion for use in a floating scaffold according to any preceding claim wherein the pipe-shaped body of the stanchion (4) is secured to the installation means (7, 8, 9, 10, 11) via a plate member (13).

8. A stanchion for use in a floating scaffold according to any preceding claim wherein the tubular pipe-shaped body of the stanchion comprises a stainless non-rusting material.

9. A stanchion for use in a floating scaffold according to any preceding claim wherein the installation means are made of a stainless non-rusting material.

## Patentansprüche

1. Stütze (4) zum Einsatz der Konstruktion eines sich über einen begrenzten Wasserraum erstreckenden Fischhälters, der ein schwimmendes Gerüst (2) mit im allgemeinen kreisförmigem Körper aufweist, der einen luftgefüllten inneren Hohlraum aufweist, so daß das Gerüst (2) auf einer Wasserfläche schwimmt, wobei die Stütze eine von mehreren Stützen ist, die entlang dem besagten schwimmenden Gerüst (2) in Abständen vorgesehen ist und zur Aufnahme eines Fischhälter-Zaunnetzes (f) und eines Handlaufs (g) angordnet ist, die oberhalb der Wasserfläche liegen, sowie zur Aufnahme eines seitlichen Fischhälternetzes (s) angeordnet sind, welches in das Wasser herunterhängt, und wobei die Stütze (4) sich im allgemeinen nach innen und oben erstreckt, so daß sich das obere Ende innerhalb des begrenzten Fischhälterwasserraums oberhalb der Wasserfläche befindet, wobei die Stütze (4) an dem schwimmenden Gerüst (2) durch Installationsmittel (7, 8, 9, 10, 11) befestigt wird, wobei die Installationsmittel bandartige Mittel einschließen, die das schwimmende Gerüst (2) umschließen und mit gegenüberliegenden L-förmigen Enden (7, 8) versehen sind, wobei diese Enden gegenseitig ausgerichtete Bolzenlöcher (10) aufweisen, damit sie eine Verbindung (9) aus Bolzen und Mutter so aufnehmen können, daß die bandartigen Mittel an dem schwimmenden Gerüst befestigt werden können, und wobei die Stütze (4) an diesen bandartigen Mitteln befestigt ist und ihre Befestigung an den bandartigen Mitteln durch vorgesehene Verstärkungsmittel (14, 17) verstärkt wird;
dadurch gekennzeichnet,
daß die Stütze (4) einen röhrenförmigen Hohlkörper hat, der eine nach innen weisende Biegung über der Wasserfläche des begrenzten Raums beschreibt, daß die Verstärkungsmittel ein Paar Verstärkungsglieder (14) einschließen, mit denen gegenüberliegende Seiten der bandartigen Mittel an entgegengesetzten Seiten des röhrenförmigen Hohlkörpers von der Stütze (4) befestigt werden, wobei die Verstärkungsmittel nach oben und innen zum begrenzten Raum hin in einem derartigen Winkel zur Wasserfläche weisen, daß die aus Bolzen und Mutter bestehenden Mittel (9), die die bandartigen Mittel an dem Gerüst (2) befestigen, unzugänglich gemacht werden.

2. Stütze zum Einsatz bei einem schwimmenden Gerüst nach Anspruch 1, bei der die Installationsmittel (7, 8, 9, 10, 11) ein einziges Band (11) umfassen, wobei die beiden Enden des Bandes (11) L-förmige Enden (7, 8) sind.

3. Stütze zum Einsatz bei einem schwimmenden Gerüst nach Anspruch 1, bei der die besagten Installationsmittel (7, 8, 9, 10, 11) ein Paar Installationsteile (107, 108) aufweisen, die durch ein Teil (111) verbunden sind, das dünner als besagte Installationsteile (107, 108) ist und L-förmige Enden (7, 8) aufweist, die so ausgebildet sind, daß sie durch Mittel (9) aus Bolzen und Mutter aneinander befestigt werden können.

4. Stütze zum Einsatz bei einem schwimmenden Gerüst nach einem der vorangehenden Ansprüche, bei der die bandartigen Mittel weiter durch ein Rippen- oder Flanschpaar (15) verstärkt werden, das zwischen gegenüberliegenden Seiten der bandartigen Mittel und entgegengesetzten Seiten des von der Stütze (4) entfernten L-förmigen Endes (7) befestigt ist, wobei die Rippen oder Flansche (15) die Verbindung (9) aus Bolzen und Mutter von außerhalb des begrenzten Wasserraums unzugänglich machen.

5. Stütze zum Einsatz bei einem schwimmenden Gerüst nach einem der vorangehenden Ansprüche, bei der die Verstärkungsmittel (14, 17) jeweils ein Strebeglied (17) aufweisen, das sich etwa nach unten von jedem Verstärkungsglied zu einem unteren Teil der Stütze erstreckt, um die Aufwärtsbewegung eines Hängeseils einzuschränken, das an dem Fischhälter unter dem Niveau der besagten Verstärkungsglieder (14) vorgesehen ist.

6. Stütze zum Einsatz bei einem schwimmenden Gerüst nach einem der vorangehenden Ansprüche, bei der das schwimmende Gerüst aus Gummi oder einem gummiartigen, elastischen Material angefertigt wird.

7. Stütze zum Einsatz bei einem schwimmenden Gerüst nach einem der vorangehenden Ansprüche, bei der der röhrenförmige Körper von der Stütze (4) durch ein Plattenglied (13) an den Installationsmitteln (7, 8, 9, 10, 11) befestigt wird.

8. Stütze zum Einsatz bei einem schwimmenden Gerüst nach einem der vorangehenden Ansprüche, bei der der röhrenförmige Kohlkörper der Stütze aus einem rostfreien, nichtrostenden Material besteht.

9. Stütze zum Einsatz bei einem schwimmenden Gerüst nach einem der vorangehenden Ansprüche, bei der die Installationsmittel aus einem rostfreien, nichtrostenden Material bestehen.

## Revendications

1. Etançon (4) pour emploi dans la construction d'une réserve de poissons définissant une zone limitée d'eau, la réserve de poissons étant définie à l'intérieur d'un échaffaudage flottant (2) comprenant un corps généralement circulaire possédant une cavité interne remplie d'air de sorte que l'échaffaudage (2) flotte à la surface de l'eau, l'étançon étant l'un parmi plusieurs étançons prévus sur ledit échaffaudage flottant (2) à intervalles le long de sa longueur et étant disposé pour soutenir un filet (f) de clôture de réserve de poissons et une barre de garde-fous (g) qui sont prévus au-dessus de la surface de l'eau, et pour soutenir un filet latéral (s) de réserve de poissons qui pend dans l'eau, l'étançon (4) s'étendant généralement vers l'intérieur et vers le haut de sorte que l'extrémité supérieure est disposée à l'intérieur de la zone limité d'eau de la réserve de poissons au-dessus de la surface de l'eau, l'étançon (4) étant attaché à l'échaffaudage flottant (2) par des moyens d'installation (7, 8, 9, 10, 11), les moyens d'installation comportant un moyen en bande qui entoure l'échaffaudage flottant (2) et possède des extrémités en forme de L opposées (7, 8), possédant des trous (10) pour boulons pour recevoir une liaison (9) à boulon et écrou afin d'attacher le moyen en bande à l'échaffaudage flottant, l'étançon (4) étant attaché au moyen en bande et un moyen de renfort (14, 17) étant prévu pour renforcer la fixation de l'étançon (4) au moyen en bande ;
caractérisé en ce que
l'étançon (4) possède un corps en forme de tuyau tubulaire qui se recourbe vers l'intérieur au-dessus de la surface de l'eau de la zone définie, le moyen de renfort comprend une paire de membres de renfort (14) attachant les côtés opposés du moyen en bande aux côtés opposés du corps en forme de tuyau tubulaire de l'étançon (4), le moyen de renfort s'étendant vers le haut et vers l'intérieur en direction de la zone clôturée à un angle par rapport à la surface de l'eau de sorte à rendre inaccessible le moyen (9) à boulon et écrou attachant le moyen en bande à l'échaffaudage (2).

2. Etançon pour emploi dans un échaffaudage flottant selon la revendication 1, dans lequel le moyen d'installation (7, 8, 9, 10, 11) consiste en une bande unique (11), les deux portions d'extrémité de la bande (11) étant des extrémités (7, 8) en forme de L.

3. Etançon pour emploi dans un échaffaudage flottant selon la revendication 1, dans lequel ledit moyen d'installation (7, 8, 9, 10, 11) possède une paire de portions d'installation (107, 108), raccordées ensemble par une portion (111) qui est plus mince que lesdites portions d'installation (107, 108) et qui est pourvue d'extrémités (7, 8) en forme de L adaptées pour être attachées ensemble par un moyen (9) à boulon et écrou.

4. Etançon pour emploi dans un échaffaudage flottant selon une revendication précédente quelconque, dans lequel le moyen en bande est en outre renforcé par une paire de nervures ou de brides (15) attachées entre les côtés opposés du moyen en bande et les côtés opposés de l'extrémité (7) en forme de L éloignée de l'étançon (4), les nervures ou brides (15) rendant la liaison (9) à boulon et écrou inaccessible depuis l'extérieur de la zone limitée définie de l'eau.

5. Etançon pour emploi dans un échaffaudage flottant selon une revendication précédente quelconque, dans lequel le moyen de renfort (14, 17) possède un membre d'étaiement (17) s'étendant quelque peu vers le bas depuis chaque membre de renfort (14) jusqu'à une portion inférieure de l'étançon de sorte à limiter le mouvement vers le haut d'une corde suspendue prévue sur la réserve de poissons en-dessous du niveau desdits membres de renfort (14),

6. Etançon pour emploi dans un échaffaudage flottant selon une revendication précédente quelconque, dans lequel l'échaffaudage flottant est en caoutchouc ou en matière élastique analogue à du caoutchouc.

7. Etancon pour emploi dans un échaffaudage flottant selon une revendication précédente quelconque, dans lequel le corps en forme de tuyau de l'étançon (4) est attaché au moyen d'installation (7, 8, 9, 10, 11) par l'intermédiaire d'un membre à plaque (13).

8. Etançon pour emploi dans un échaffaudage flottant selon une revendication précédente quelconque, dans lequel le corps en forme de tuyau tubulaire de l'étançon est constitué d'une matière inoxydable qui ne rouille pas.

9. Etançon pour emploi dans un échaffaudage flottant selon une revendication précédente quelconque, dans lequel le moyen d'installation est en matière inoxydable qui ne rouille pas.
